## Europäisches Patentamt
## European Patent Office
## Office européen des brevets

(19)

(11) Veröffentlichungsnummer : **0 189 569**
**B1**

(12) **EUROPÄISCHE PATENTSCHRIFT**

(45) Veröffentlichungstag der Patentschrift :
01.02.89

(51) Int. Cl.⁴ : **F 16 B 13/02**

(21) Anmeldenummer : 85115773.5

(22) Anmeldetag : 11.12.85

(54) **Befestigungselement.**

(30) Priorität : **22.12.84 DE 8437902 U**
**22.12.84 EP 84116221**

(43) Veröffentlichungstag der Anmeldung :
**06.08.86 Patentblatt 86/32**

(45) Bekanntmachung des Hinweises auf die Patenterteilung : **01.02.89 Patentblatt 89/05**

(84) Benannte Vertragsstaaten :
**AT BE CH DE FR GB IT LI LU NL SE**

(56) Entgegenhaltungen :
**EP--A-- 0 074 469**
**DE--C--   72 483**
**DE--C--   945 665**
**FR--A-- 2 438 192**
**FR--A-- 2 476 771**
**GB--A-- 2 015 634**
**GB--A-- 2 091 368**
**US--A-- 2 292 557**
**US--A-- 4 453 361**

(73) Patentinhaber : **EJOT Adolf Böhl GmbH & Co. KG**
**Adolf-Böhl-Strasse 7**
**D-5920 Bad Berleburg 4 - Berghausen (DE)**

(72) Erfinder : **Riecke, Ernst-Hermann, Dipl.-Ing.**
**Ostpreussenstrasse 5**
**D-5920 Bad Berleburg 4 (DE)**
Erfinder : **de Gero, Paul, Dipl. L. Jur.**
**Oberes Loh 38**
**D-5920 Bad Berleburg 16 (DE)**

(74) Vertreter : **Patentanwälte Dipl.-Ing. R. Schlee Dipl.-Ing. A. Missling**
**Bismarckstrasse 43**
**D-6300 Giessen (DE)**

EP 0 189 569 B1

## Beschreibung

Die Erfindung bezieht sich auf ein Befestigungselement, insbesondere für die Befestigung von wärme- und schallisolierenden Platten an einer Unterkonstruktion, mit einem vorzugsweise als Kunststoff-Spritzteil ausgebildeten Halteteil mit einer Hülse, die eine sich über mindestens einen Teil ihrer Länge erstreckende, axial zusammenpreßbare Knautschzone und am hinteren Ende des Befestigungselementes eine einstückig angeformte Druckplatte aus Kunststoff aufweist, wobei die Druckplatte gegenüber dem Hülsendurchmesser großflächig ausgebildet ist und mit einem Stift aus steifem Material, insbesondere aus Metall, der in die Hülse einsetzbar ist und am hinteren Ende eine Schulter aufweist, die an einer ringförmigen Anlagefläche der Hülse zur Anlage bringbar ist.

Ein Befestigungselement dieser Art ist aus der europäischen Patentanmeldung A1-0 074 469 bekannt. Dieses Befestigungselement dient zur Befestigung von wärme- und schallisolierenden Materialien an Gebäuden. Die Hülse ist bei dem bekannten Befestigungselement als Dübel ausgebildet, d. h. die Bohrung in der Hülse hat einen wesentlich kleineren Durchmesser als der Stift, so daß sich die Hülse unter Einwirkung des eingeschlagenen Stiftes spreizt, wobei die Hülse mit ihrer Außenwand an die Innenwand der Bohrung angepreßt wird, in die die Hülse eingreift, wodurch eine Verankerung in der Unterkonstruktion bewirkt wird. Diese Art der Befestigung setzt jedoch voraus, daß in die Unterkonstruktion eine Bohrung eingebracht wird, in die die Hülse eingeschoben werden kann. Erst im Anschluß an das Herstellen der Bohrung kann die eigentliche Befestigung durch Einschlagen des Stiftes in die Hülse erfolgen. Das Einsetzen des Befestigungselementes und seine Fixierung durch Einschlagen des Stiftes ist zwar in kurzer Zeit mit geringem Arbeitsaufwand möglich, jedoch erfordern die vorbereiteten Arbeiten, d. h. die Herstellung der Bohrungen, einen vergleichsweise großen Arbeitsaufwand.

Die GB-A-2 091 368 zeigt im wesentlichen ein Befestigungselement in Form eines Dübels, wie es dem der EP-A1-0 074 469 entspricht, mit dem Unterschied, daß hier die Hülse über einen bestimmten Abschnitt etwas geschwächt ausgebildet ist, so daß hierdurch eine axial zusammenpreßbare Knautschzone erhalten wird. Auch dieser Dübel benötigt eine Bohrung in der Unterkonstruktion, wobei der in den Dübel einzuführende Nagel nicht in die Unterkonstruktion eindringt, sondern lediglich den Dübel spreizt, so daß dieser in der Bohrung fest verankert ist.

Der Erfindung liegt die Aufgabe zugrunde, ein Befestigungselement der eingangs genannten Art so auszubilden, daß es mit geringem Arbeitsaufwand montiert werden kann, wobei das Befestigungselement für die Befestigung von Platten unterschiedlicher Dicke verwendbar sein soll.

Diese Aufgabe wird bei einem eingangs dargelegten Befestigungselement erfindungsgemäß dadurch gelöst, daß die Hülse am vorderen Ende des Befestigungselementes ein als Anlagefläche ausgebildetes Hülsenende aufweist und daß der Stift bei Anlage seiner Schulter an der ringförmigen Anlagefläche mit einem Verankerungsbereich aus dem als Anlagefläche ausgebildeten Hülsenende herausragt.

Bei der Montage eines so ausgebildeten Befestigungselementes wird das Befestigungselement durch die zu befestigende Platte hindurchgedrückt. Eine Vorlochung der Platte ist im allgemeinen nicht erforderlich, da solche Platten naturgemäß aus einem Material bestehen, das mit der Hülse des Befestigungselementes leicht durchstoßen werden kann. Hierbei kann das Befestigungselement auf ein Schlag- oder Schraubgerät aufgesteckt sein, wodurch die Handhabung weiter erleichtert wird. Wenn die Hülse bis zur Unterkonstruktion vorgedrungen ist, wird der Stift in die Unterkonstruktion eingetrieben, sei es durch Ausübung von Schlägen oder Stößen oder sei es durch Eindrehen, wenn der Stift als Schraube ausgebildet ist. Wenn der Stift an der ringförmigen Anlagefläche zur Anlage gekommen ist, wird beim weiteren Eintreiben des Stiftes die Hülse im Bereich der Knautschzone zusammengedrückt, bis schließlich die Druckplatte des Befestigungselementes auf der zu befestigenden Platte zur Auflage gekommen ist. Durch Einstellung der Eintreibkraft und damit der Eintreibtiefe kann der Druck eingestellt werden, mit dem die Druckplatte an der zu befestigenden Platte anliegt. Dadurch wird erreicht, daß die Druckplatte stets fest an der zu befestigenden Isolierplatte anliegt und der Stift mit seiner Schulter fest an der ringförmigen Auflagefläche der Hülse aufliegt.

Die Knautschzone gewährleistet auch, daß die Hülse mit Druck an der Unterkonstruktion anliegt, so daß der Stift über die gesamte Länge der Platte von der Hülse umgeben ist, wodurch sichergestellt ist, daß der aus der Unterkonstruktions herausragende Teil des Stiftes zusätzlich korrosionsgeschützt und wärmeisolierend umhüllt ist. Das verhindert wärmeleitende Brücken. Weiter wird durch die Knautschzone erreicht, daß ein Befestigungselement mit einer vorgegebenen Länge der Hülse für die Befestigung von Platten mit unterschiedlichen Dicken eingesetzt werden kann. Die Dicke der zu befestigenden Platte kann also im Bereich des Verformungsweges der Knautschzone verschieden sein. Bei dickeren Platten wird die Knautschzone weniger verformt, während die Verformung bei dünneren Platten größer ist.

Der Stift kann gemäß Anspruch 2 im Bereich seines hinteren Endes mit Kunststoff ummantelt sein und mit diesem ummantelten Ende dicht am Halteteil anliegen. Diese Maßnahme ist an sich bekannt aus der eingangs genannten Veröffentlichung und hat den Vorteil, daß kalte Flächen am Ende des Stiftes sowie das Eindringen von Feuchtigkeit von außen her vermieden werden. Dies ist insbesondere dann von Vorteil, wenn der Stift bis zur Druckplatte hin reicht.

Vorteilhaft jedoch ist auch eine Ausführungsform gemäß den Ansprüchen 3 und 4, bei der die ringförmige Anlagefläche einen großen Abstand von der Druckplatte aufweist. Diese Ausführungsform ermöglicht es, mit relativ kurzen Stiften sehr dicke Isolierplatten zu befestigen. Beim Zusammendrücken einer Isolierplatte, z. B. beim Begehen eines isolierten Daches, besteht nicht die Gefahr, daß der in der Unterkonstruktion fest verankerte und nicht weiter eindrückbare Stift durch eine die Isolierplatte abdeckende Schicht hindurchgedrückt wird. Bei einer Ausführungsform mit tief versenktem Stift gemäß den Ansprüchen 3 und 4 kann der Stift vollständig aus Metall bestehen und frei von einer Ummantelung sein (Anspruch 5). Diese Ausführungsform ist besonders billig herstellbar, da eine Ummantelung des Stiftes nicht erfolgt und der Stift auch kurz ausgebildet ist, wodurch der Materialaufwand verringert wird. Im Falle eines Metallstiftes, dessen Ende nicht ummantelt ist, kann auch ein Korrosionsschutz erreicht werden durch Ausfüllen des Hülsenhohlraumes nach der Montage des Befestigungselementes.

Gemäß einer Weiterbildung der Erfindung (Anspruch 6) ist am vorderen Ende der Hülse ein steifer Führungsabschnitt vorgesehen, an den in Richtung der Druckplatte die Knautschzone anschließt. Der vordere Führungsabschnitt hat den Vorteil, daß ein seitliches Abknicken der Hülse während der Montage vermieden wird. Dadurch ist es auch möglich, am vorderen Ende der Hülse eine Brücke vorzusehen, die die Hülsenbohrung überbrückt bzw. abdeckt (Anspruch 7). Die Brücke wird beim Eintreiben des Stiftes durchstoßen. Die Brücke gibt der Hülse eine Form, die das Durchstoßen von Isolierplatten erleichtert.

Wie schon erwähnt, kann der Stift sowohl als Schlagstift (Anspruch 8) als auch als Schraube (Anspruch 9) ausgebildet sein. Im ersteren Fall hat der Stift eine Nagelspitze, während im zweiten Fall der Stift an seinem hinteren Ende Mitnehmerflächen für die Übertragung eines Drehmomentes aufweist.

Die Knautschzone kann auf verschiedene Art und Weise gebildet sein. Besonders zweckmäßig sind mehrere ringförmige Bereiche mit reduzierter Wandstärke (Anspruch 10).

Der Kopf des Befestigungselementes ist vorzugsweise in einer Vertiefung aufgenommen (Anspruch 11). Dies ermöglicht es, zur Verdeckung der Befestigungselemente eine nur dünne Putzschicht vorzusehen. Zur Abdichtung kann eine axiale Anlage des Kopfes am Halteteil gemäß Anspruch 12 vorgesehen werden. Eine Abdichtung kann auch an einer kreisrunden Umfangsfläche erfolgen (Anspruch 13). Der Stift kann ausgehend von seinem Kopf über einen Teil seiner Länge mit Kunststoff ummantelt sein (Anspruch 14), wodurch die Abdichtung weiterhin verbessert wird, insbesondere dann, wenn der mit Kunststoff ummantelte Teil des Stifes gemäß Anspruch 15 passend in die Hülsenbohrung eingreift. Die Merkmale nach den Ansprüchen 11 bis 15 sind an sich bekannt aus der eingangs genannten Veröffentlichung, sind jedoch auch von wesentlichem Vorteil bei einem Dübel mit Knautschzone gemäß der Erfindung.

In der Zeichnung sind Ausführungsbeispiele der Erfindung dargestellt. Es zeigen :

Fig. 1 teils im Längsschnitt teils in Ansicht ein Befestigungselement gemäß einer ersten Ausführungsform der Erfindung, bei der der Stift bis zur Druckplatte hin reicht,

Fig. 2 eine Draufsicht auf das Befestigungselement nach Fig. 1,

Fig. 3 einen Längsschnitt durch das Befestigungselement nach den Fig. 1 und 2 in einem Montagezustand, in dem die Hülse durch eine zu befestigende Platte bis zur Unterkonstruktion hin durchgedrückt ist,

Fig. 4 einen Längsschnitt durch das Befestigungselement nach den Fig. 1 bis 3 nach vollständiger Montage,

Fig. 5 teils im Längsschnitt, teils in Ansicht ein Befestigungselement gemäß einer zweiten Ausführungsform der Erfindung mit einem als Schraube ausgebildeten Stift, der bis zur Druckplatte hin reicht und einer Führungszone am vorderen Ende der Hülse,

Fig. 6 eine Draufsicht auf das Befestigungselement nach Fig. 5,

Fig. 7 einen Längsschnitt durch das Befestigungselement nach den Fig. 5 und 6 nach vollständiger Montage,

Fig. 8 teils im Längsschnitt, teils in Ansicht ein Befestigungselement gemäß einer dritten Ausführungsform der Erfindung mit einem als Nagel ausgebildeten Stift, der bis zur Druckplatte hin reicht und einer Führungszone am vorderen Ende der Hülse,

Fig. 9 eine Draufsicht auf das Befestigungselement nach Fig. 8,

Fig. 10 einen Längsschnitt durch das Befestigungselement nach den Fig. 8 und 9 in einem Montagezustand, in dem die Hülse durch eine zu befestigende Platte bis zur Unterkonstruktion hin durchgedrückt ist,

Fig. 11 einen Längsschnitt durch das Befestigungselement nach den Fig. 9 und 10 nach vollständiger Montage,

Fig. 12 einen Längsschnitt durch ein Befestigungselement gemäß einer vierten Ausführungsform der Erfindung, bei dem der Stift tief in der Hülse versenkt ist,

Fig. 13 eine Draufsicht auf das Befestigungselement nach Fig. 12 und

Fig. 14 einen Längsschnitt durch das Befestigungselement nach den Fig. 12 und 13 nach vollständiger Montage.

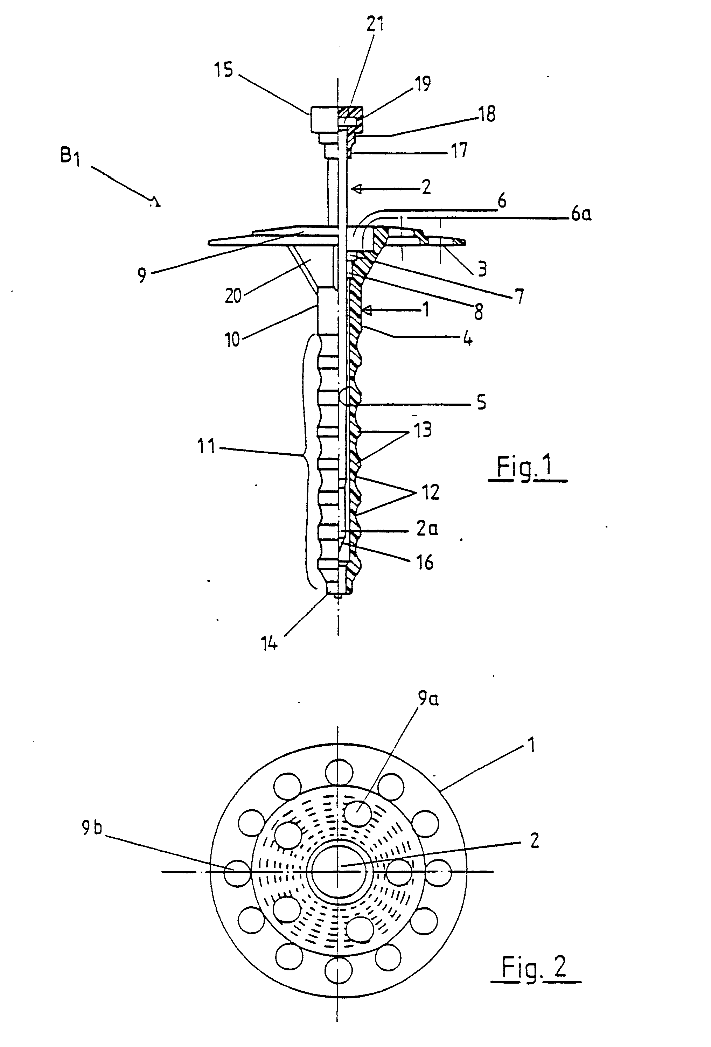

Das Befestigungselement $B_1$ nach den Fig. 1 bis 4 hat einen Halteteil 1 und einen Stift 2.

Der Halteteil 1 besteht aus einer Druckplatte 3 und einer Hülse 4, die einstückig mit der Druckplatte 3 ausgebildet ist. Der Halteteil 1 ist als Kunststoff-Spritzteil ausgebildet.

Die Hülse 4 enthält eine Hülsenbohrung 5, deren Durchmesser nur wenig größer ist als der Durchmesser des Stiftes 2. In der Druckplatte 3 ist eine Vertiefung 6 für den Eingriff des Stiftkopfes vorgesehen. An die Vertiefung 6 schließt ein Abschnitt 7 an, dessen Durchmesser kleiner ist als der Durchmesser der Vertiefung 6, jedoch größer als der Durchmesser der Hülsenbohrung 5. An den Abschnitt 7 schließt ein Abschnitt 8 an, dessen Durchmesser wieder etwas geringer ist als der Durchmesser des Abschnittes 7, jedoch noch ein wenig größer als der Durchmesser der Hülsenbohrung 5. Die Bodenfläche 6a der Vertiefung 6 ist eben und für die Anlage des Kopfes des Stiftes bestimmt.

In der Druckplatte 3 befinden sich zwei Kränze aus Bohrungen, nämlich ein innerer Kranz aus fünf Bohrungen 9a und ein äußerer Kranz aus zwölf Bohrungen 9b. Die äußeren Bohrungen 9b sind glatt, während die inneren Bohrungen 9a aus einem unteren Abschnitt von relativ großem Durchmesser und einem oberen Abschnitt von relativ kleinem Durchmesser bestehen.

Die Hülse 4 hat einen glatten Teil 10, der an die Druckplatte 3 über einen kegeligen Übergangsbereich 20 anschließt sowie eine Knautschzone 11, die bis zum vorderen Ende der Hülse 4 reicht. Die Knautschzone 11 hat ringförmige Bereiche 12, die eine geringere Wandstärke aufweisen als die zwischen den ringförmigen Bereichen 12 liegenden Bereiche 13. Die Knautschzone 11 kann durch einen axialen Druck, der vom unteren Hülsenende 14 her einwirkt, axial zusammengestaucht werden, wobei in der Knautschzone eine Art Faltung ähnlich der Faltung eines Faltenbalgens stattfindet. Es ist eine Verkürzung etwa um die Summe der Längen der ringförmigen Bereiche 12 möglich. Die Hülse 4 läßt sich um einen erheblichen Teil ihrer Länge zusammendrücken.

Der Stift 2 ist bei der Ausführungsform nach den Fig. 1 bis 4 ein Schlagstift, der vorzugsweise aus Stahl besteht. An seinem hinteren Ende hat der Stift 2 einen Kopf 15 aus Kunststoff, der einen flachen Kopf 21 des Stahlstiftes 2 umhüllt. Der Kopf 15 ist abgestuft. Der obere Abschnitt 19 hat den größten Durchmesser. Dieser Durchmesser ist ein wenig kleiner als der Innendurchmesser der Vertiefung 6. Der nach unten daran anschließende Abschnitt 18 paßt in den Abschnitt 7 der Hülsenbohrung und der dünnste Abschnitt 17 der Kunststoffumhüllung paßt in den Abschnitt 8 der Hülsenbohrung. Der Kunststoffkopf 15 besteht aus thermoplastischem Material und wird durch Umspritzen des Stiftes 2 hergestellt.

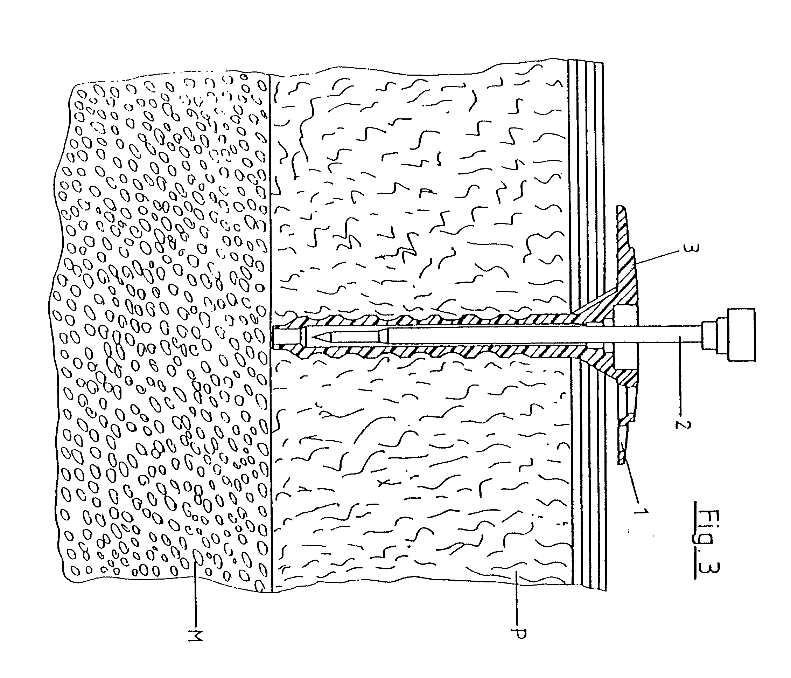

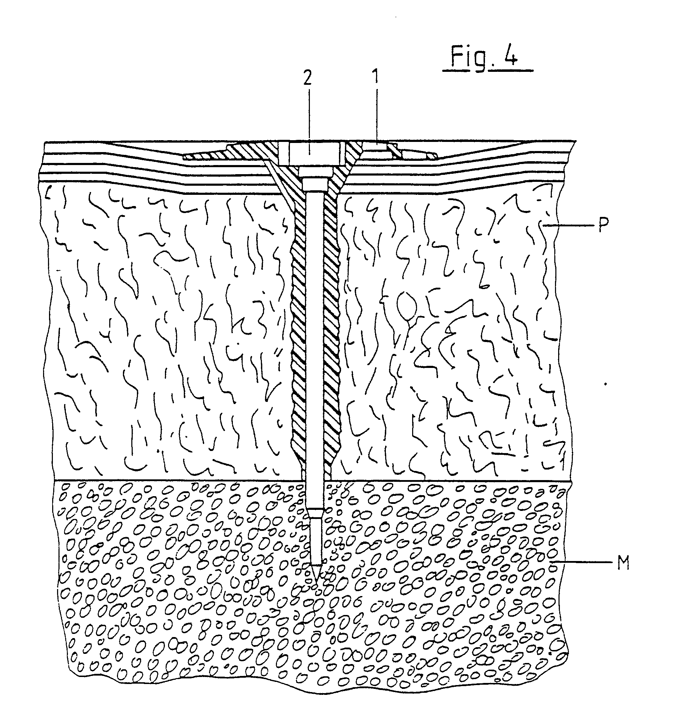

Im Lieferzustand ist der Stift 2 in die Hülse 4 eingesteckt, wie dies Fig. 1 zeigt, wodurch der Stift unverlierbar am Halteteil 1 gehalten ist. Bei der Montage des Befestigungselementes ist dieses vorzugsweise auf ein Schußgerät aufgesteckt. Die Hülse wird durch die Platte P hindurchgedrückt, bis sie an der Unterkonstruktion M zur Anlage kommt, wie dies in Fig. 3 dargestellt ist. Danach wird der Stift 2 in die Unterkonstruktion M, z. B. Mauerwerk, mittels des Schußgerätes eingeschossen. Hierbei dringt der Stift mit seinem Verankerungsbereich 2a in das Mauerwerk M ein, wobei der Kopf des Stiftes am Boden 6a der Vertiefung 6 zur Anlage kommt. Beim weiteren Eintreiben des Stiftes wird die Hülse 4 im Bereich der Knautschzone gestaucht. Im fertig montierten Zustand, der in Fig. 4 dargestellt ist, liegt die Druckplatte 3 fest an der Oberseite der zu befestigenden Isolierplatte P an, wobei die Länge der Hülse an die Dicke der Platte P angepaßt wurde. Der Halt des Befestigungselements in der Unterkonstruktion ist mindestens ebenso gut wie bei der Befestigung mittels eines Dübels.

Eine Befestigung kann auch ohne Verwendung eines Schußgerätes erfolgen. In diesem Fall kann das Befestigungselement von Hand an der Druckplatte erfaßt und die Hülse durch die Platte P hindurchgedrückt werden, wonach der Stift 2 mittels Hammerschlägen auf seinen Kopf 15 eingetrieben werden kann.

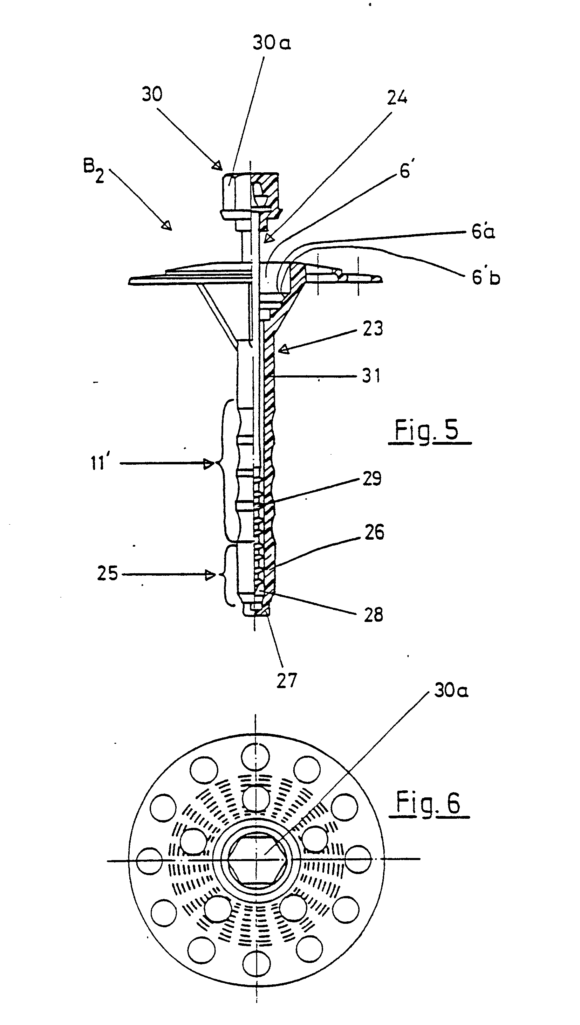

Das insgesamt mit $B_2$ bezeichnete Befestigungselement nach den Fig. 5 bis 7 hat einen Halteteil 23 und einen Stift 24. Der obere Bereich des Halteteiles 23 ist gleich ausgebildet wie bei dem Ausführungsbeispiel nach den Fig. 1 bis 4. Die hier mit 11' bezeichnete Knautschzone erstreckt sich jedoch nicht bis zum vorderen Ende der Hülse sondern endet vor einem Führungsabschnitt 25. In Führungsabschnitt 25 ist die Wand 26 der Hülse zylindrisch und verhältnismäßig dick ausgebildet. Am vorderen Ende der Hülse befindet sich eine Brücke 27, die die vordere Mündung der Hülsenbohrung 28 überbrückt.

Der Stift 24 ist als Schraube ausgebildet und hat demgemäß in seinem vorderen Bereich ein Schraubgewinde 29. Der Kopf 30 des Stiftes 24 ist ebenfalls durch eine Kunststoffumhüllung des im übrigen aus Metall, vorzugsweise aus Stahl, bestehenden Stiftes 24 gebildet. Der Kopf 24 hat einen oberen Abschnitt 30a, der als Sechskant ausgebildet ist, wie insbesondere auch aus Fig. 6 zu ersehen ist.

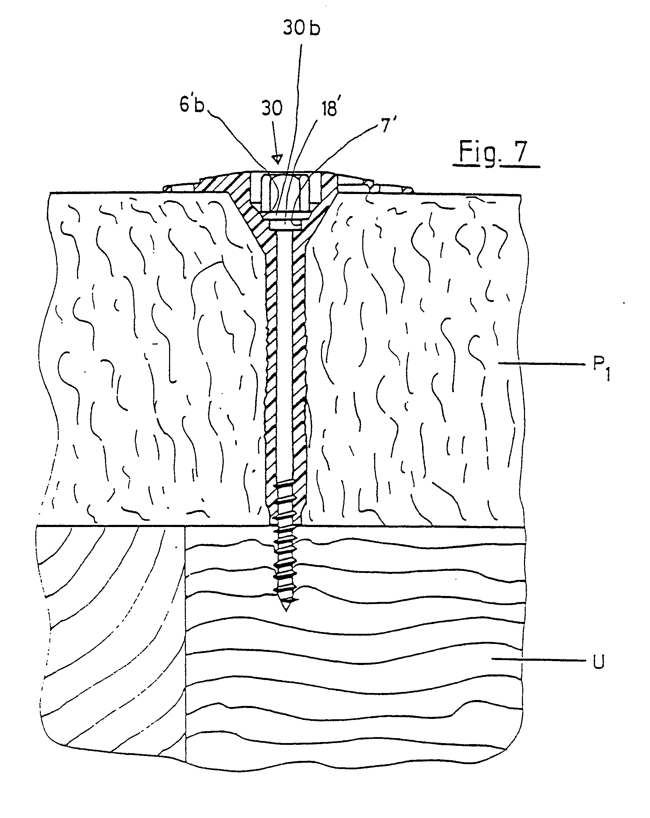

Bei der Montage des Befestigungselementes nach den Fig. 5 und 6 ist dieses vorzugsweise auf ein Schraubgerät aufgesteckt. Mit der Hülse wird, wie bereits beschrieben, die zu befestigende Platte $P_1$ durchstoßen, bis die Hülse auf der Unterkonstruktion U zur Auflage gekommen ist. Die Unterkonstruktion besteht in diesem Falle aus Holz. Die Drehmomentübertragung beim Einschrauben erfolgt über den Sechskant 30a. Beim Durchbohren der Brücke 27 wird ein seitliches Ausbiegen der Hülse verhindert, da diese in dem Führungsabschnitt 25 eine große Steifigkeit aufweist. Nach einer gewissen Einschraubtiefe kommt der Kopf 30 am Boden 6'a der Vertiefung 6' zur Anlage. Beim weiteren Einschrauben wird die Hülse 31 axial zusammengedrückt, was aufgrund der Knautschzone 11' möglich ist. Der Zustand nach vollständigem Einschrauben des Stiftes ist in Fig. 7 dargestellt.

Nach vollständigem Einschrauben des Stiftes 24 liegt dieser dichtend am Halteteil 23 an, wobei (siehe Fig. 7) entsprechend der Ausführungsform nach den Fig. 1 bis 4 der Kopfabschnitt 18' in den Abschnitt 7' des Halteteiles eingreift. Am Kopf befindet sich auch ein kegeliger Abschnitt 30b, der dichtend an einem hohlkegeligen Abschnitt 6'b der Vertiefung 6' anliegt. Der Durchmesser der Vertiefung 6' ist um so viel größer als der Außenumfang des Sechskantes 30a, daß eine Mitnehmerhülse noch in die Vertiefung 6' eintauchen kann.

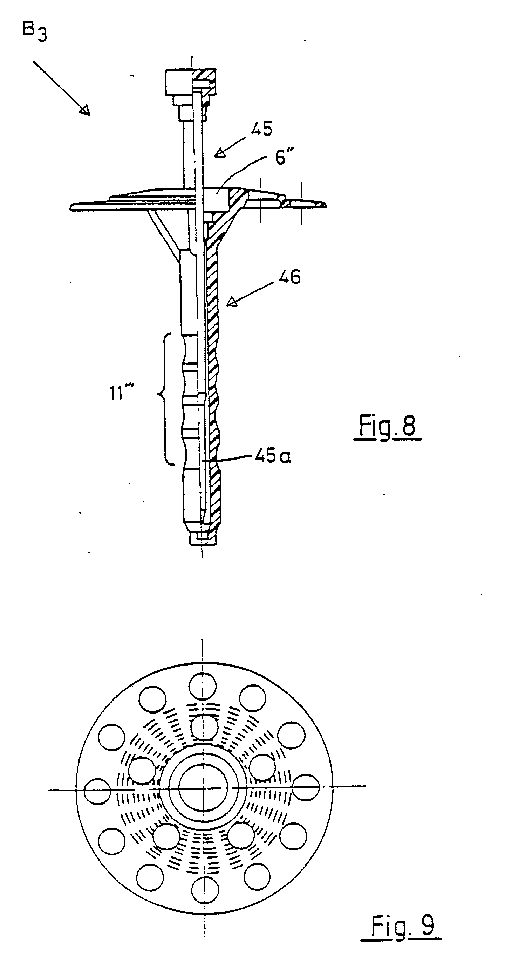

Das Befestigungselement $B_3$ nach den Fig. 8 bis 11 unterscheidet sich von dem Befestigungselement $B_2$ im wesentlichen dadurch, daß der Stift 45 wieder als Nagel ausgebildet ist. Der Nagel 45 unterscheidet sich von dem Nagel 2 des Befestigungselementes $B_1$ nur dadurch, daß der vordere dünnere Teil 45a länger ist als beim Befestigungselement $B_1$. Der Kopf ist in gleicher Weise für den dichtenden Eingriff in die Vertiefung 6" bestimmt wie beim Befestigungselement $B_1$. Dementsprechend ist auch die Vertiefung 6" im Halteteil 46 des Befestigungselementes $B_3$ gleich ausgebildet wie die Vertiefung 6 am Halteteil 1 des Befestigungselementes $B_1$.

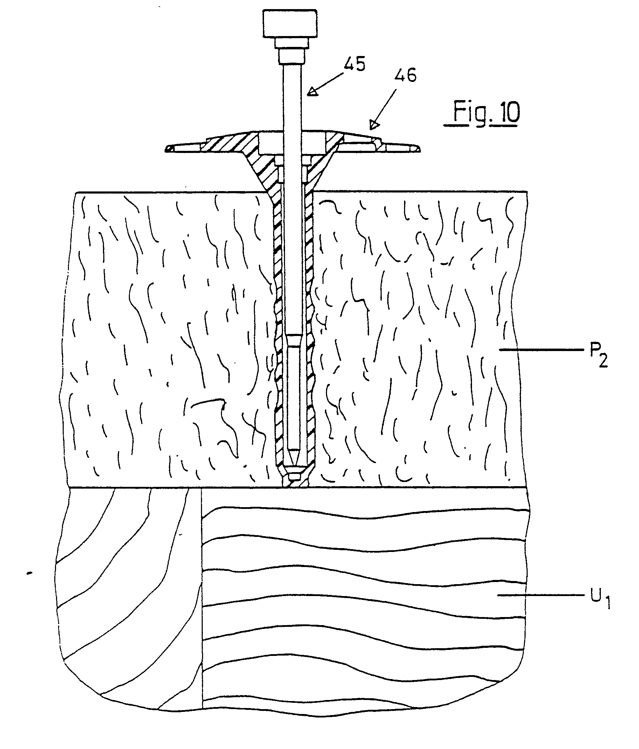

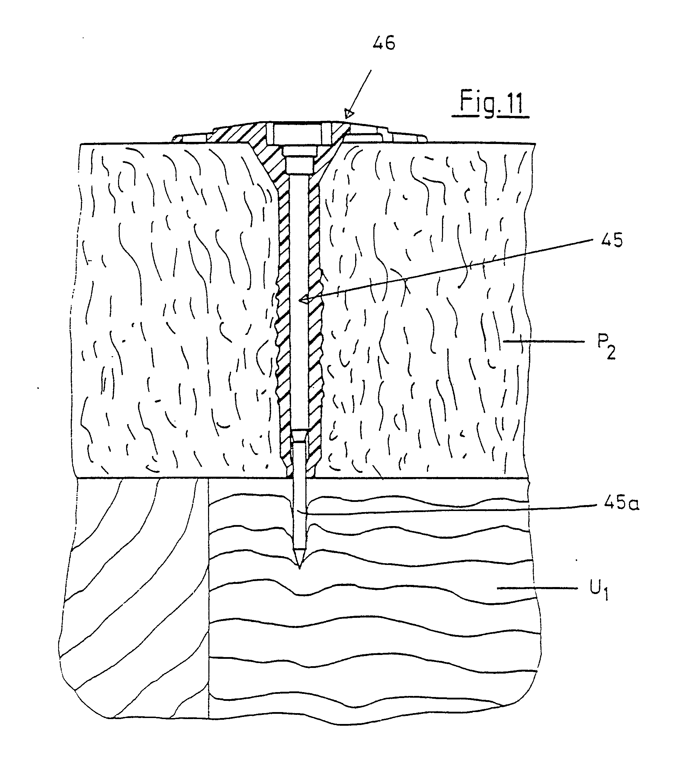

Die Montage erfolgt in gleicher Weise, wie dies bereits für das Befestigungselement $B_1$ beschrieben wurde. Nach dem Durchstecken der Hülse durch die Isolierplatte $P_2$ (in Fig. 10 dargestellter Zustand) wird der Nagel in die Unterkonstruktion $U_1$ eingeschlagen, die ebenfalls aus Holz besteht. Der Zustand nach vollständiger Montage ist in Fig. 11 dargestellt. Hierbei greift der Stift 45 nur mit seinem vorderen dünnen Teil 45a in das Holz ein, während (siehe Fig. 4) beim Befestigungselement $B_1$ auch der dickere Teil des Nagels in das Mauerwerk M eingreift.

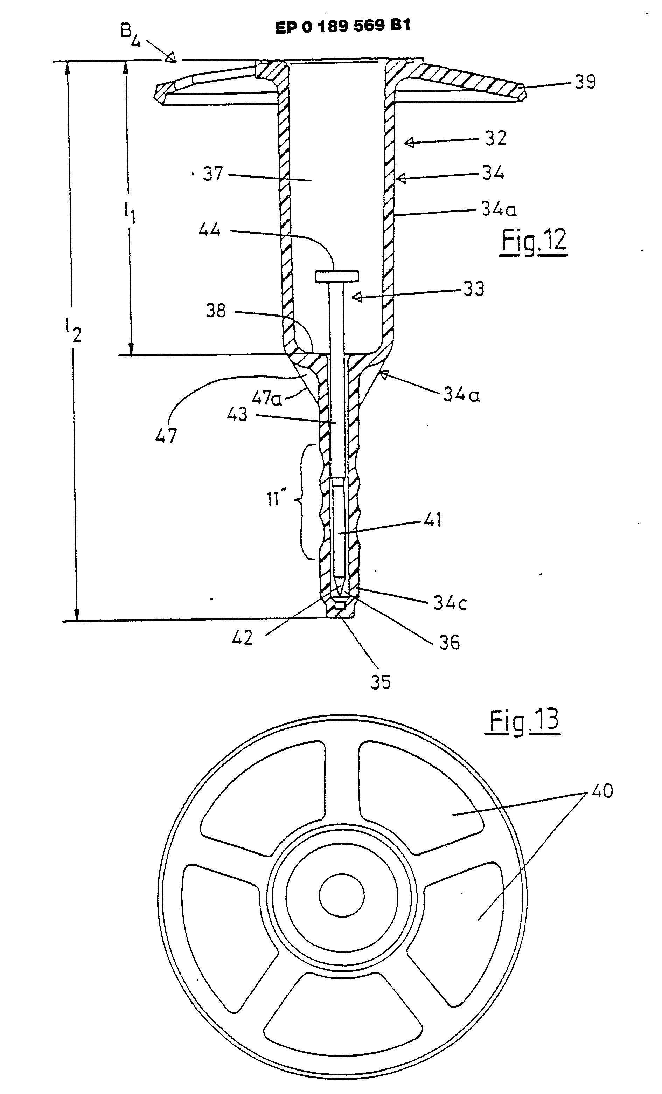

Das Befestigungselement nach den Fig. 12 bis 14 ist insgesamt mit $B_4$ bezeichnet. Auch dieses Befestigungselement hat einen Halteteil 32 und einen Stift 33. Der Stift 32 hat eine Hülse 34, die über den größten Teil ihres Bereiches, nämlich über einen Abschnitt 34a einen relativ großen Durchmesser aufweist. Der Abschnitt 34a, der im wesentlichen zylindrisch oder aus formtechnischen Gründen nur leicht konisch ist, schließt nach vorne ein Übergangsabschnitt 34a an, an dem sich vier gleichmäßig über den Umfang verteilte Rippen 47 befinden. Die Rippen 47 können auch als Teile eines schlanken Kegels aufgefaßt werden, von dessen Außenfläche nur streifenförmige Bereiche übrig geblieben sind, nämlich die Endflächen 47a der Rippen 47. An den Übergangsabschnitt 34a schließt eine Knautschzone 11" und an diese ein zylindrischer Führungsabschnitt 34 an. Am vorderen Ende der Hülse befindet sich wieder eine Brücke 35, die die Hülsenbohrung 36 an ihrer vorderen Mündung überbrückt.

Im Hülsenabschnitt 34a hat die Hülse einen Bohrungsabschnitt 37 von großem Durchmesser, an dessen unterem Ende sich ein Boden 38 befindet, der eine ringförmige Auflagefläche für den Kopf des Stiftes 33 bildet.

Die Druckplatte 39 ist bei diesem Ausführungsbeispiel von fünf großen segmentförmigen Löchern 40 durchbrochen.

Der Stift 23 hat einen vorderen Verankerungsbereich 41, der vorne mit einer Nagelspitze 42 endet. An den Verankerungsbereich 41 schließt sich ein dickerer Zugbereich 43 an. Am hinteren Ende des Stiftes befindet sich ein Kopf 44. Der Stift 33 besteht vollständig aus Metall, d. h. eine Kunststoffumhüllung ist an diesem Stift nicht vorgesehen.

Der Abstand $l_1$ zwischen der Druckplatte 39 und der ringförmigen Anlagefläche 38 beträgt bei dem gezeichneten Ausführungsbeispiel ungefähr 60 % der Gesamtlänge $l_2$ des Halteteiles 32, d. h. der Stift 33 ist sehr tief in den Halteteil 32 versenkt.

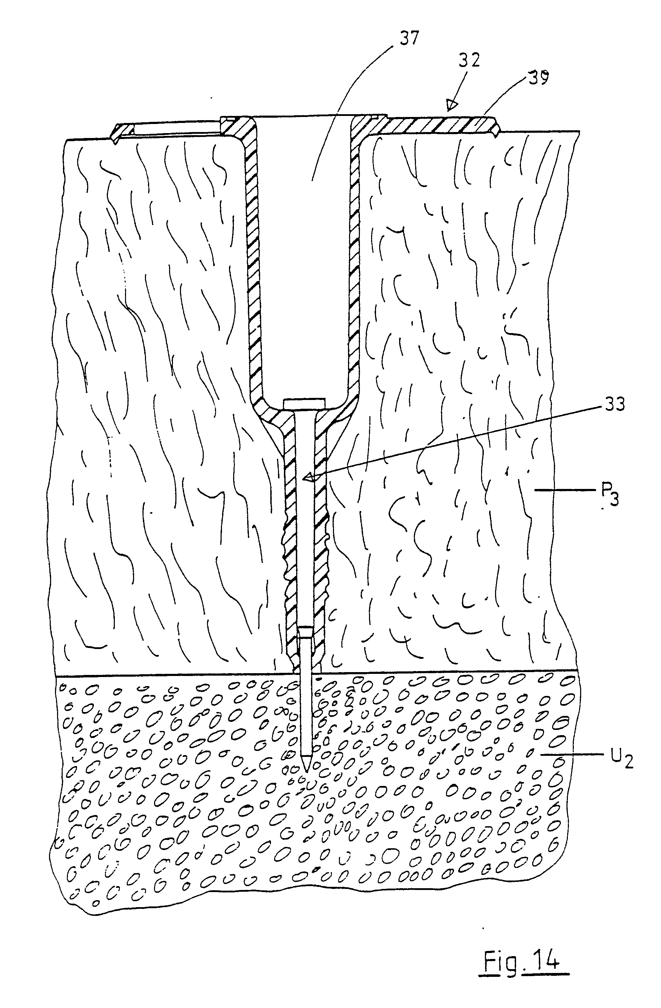

Bei der Montage des Befestigungselementes nach den Fig. 12 bis 14 wird die Hülse 34 ebenfalls durch die zu befestigende Platte hindurchgedrückt. Dies ist auch hier möglich, da der dünne vordere Teil der Hülse leicht in das Material der Platte $P_3$ eindringt und das Plattenmaterial über den schlanken kegeligen Teil 34a leicht aufgeweitet werden kann. Wenn die Hülse auf der Unterkonstruktion zur Auflage gekommen ist, wird der Stift 33 in die Unterkonstruktion eingeschlagen mit Hilfe eines Werkzeuges, das die Hülsenbohrung 37 durchgreift. Vorzugsweise handelt es sich auch hierbei um einen Schußapparat. Der vordere Führungsabschnitt 34c verhindert ein seitliches Austreten des Stiftes 33 sicher bis die Brücke 35 durchstoßen ist und der Stift in die Unterkonstruktion $U_2$ eindringen kann. Schließlich kommt der Kopf 44 auf der ringförmigen Auflagefläche 38 zur Anlage, wonach eventuell eine Verformung der Hülse 34 in der Knautschzone 11" stattfindet. Der Zustand nach vollständiger Montage, also auch nach Kompression der Hülse, ist in Fig. 14 dargestellt.

Da der Stift 33 tief in der Hülse 34 versenkt ist, kann auf eine Kunststoffummantelung des hinteren Stiftendes verzichtet werden, da an dieser Stelle keine so niedrigen Temperaturen erreicht werden, daß die Gefahr einer Kondenswasserbildung am Stift besteht. Sollte doch ein besonderer Schutz gegen Kondenswasserbildung nötig werden, so kann der weite Teil der Hülsenbohrung 37 mit wärmeisolierendem Material ausgefüllt werden. Wie schon in der Beschreibungseinleitung erwähnt, kann ein Zusammendrücken der Isolierplatte $P_3$ in der Umgebung des Halteteiles 32 wegen der tiefen Versenkung des Stiftes 33 nicht dazu führen, daß der Kopf des Stiftes eine die Druckplatte 39 des Halteteiles 32 überspannende Schicht (in der Zeichnung nicht dargestellt) durchstößt.

## Patentansprüche

1. Befestigungselement ($B_1$ ; $B_2$ ; $B_3$ ; $B_4$), insbesondere für die Befestigung von wärme- und schallisolierenden Platten ($P$ ; $P_1$ ; $P_2$ ; $P_3$) an einer Unterkonstruktion ($M$ ; $U$ ; $U_1$ ; $U_2$), mit einem vorzugsweise als Kunststoff-Spritzteil ausgebildeten Halteteil (1 ; 23 ; 32 ; 46) mit einer Hülse (4 ; 31 ; 34), die eine sich über mindestens einen Teil ihrer Länge erstreckende, axial zusammenpreßbare Knautschzone (11 ; 11' ; 11") und am hinteren Ende des Befestigungselementes eine einstückig angeformte Druckplatte (3, 39) aus Kunststoff aufweist, wobei die Druckplatte gegenüber dem Hülsendurchmesser großflächig ausgebildet ist, und mit einem Stift (2 ; 24 ; 33 ; 45) aus steifem Material, insbesondere aus Metall, der in die Hülse (4 ; 31 ; 34) einsetzbar ist und am hinteren Ende eine Schulter (19 ; 44) aufweist, die an einer ringförmigen Anlagefläche (6a ; 6'a ; 38) der Hülse (4 ; 31 ; 34) zur Anlage bringbar ist, dadurch gekennzeichnet, daß die Hülse (4 ; 31 ; 34) am vorderen Ende des Befestigungselementes ein als Anlagefläche ausgebildetes Hülsenende (14, 35) aufweist und daß der Stift (2 ; 24 ; 33 ; 45) bei Anlage seiner Schulter (19 ; 44) an der ringförmigen Anlagefläche (6a ; 6'a ; 38) mit einem Verankerungsbereich (2a ; 29 ; 41) aus dem als Anlagefläche ausgebildeten Hülsenende herausragt.

2. Befestigungselement nach Anspruch 1, dadurch gekennzeichnet, daß der Stift (2 ; 24 ; 45) im Bereich seines hinteren Endes mit Kunststoff ummantelt ist und mit seinem ummantelten Bereich (30) dichtend am Halteteil (1 ; 23 ; 46) anliegt, vorzugsweise im Bereich der Druckplatte (3).

3. Befestigungselement nach Anspruch 1, dadurch gekennzeichnet, daß die ringförmige Anlagefläche (38) der Hülse (34) einen Abstand von der Druckplatte (39) aufweist und der Hülseninnendurchmesser ausgehend von der ringförmigen Anlagefläche (38) größer ist als der Durchmesser des Kopfes (44) des Stiftes, wobei vorzugsweise ein hinterer dicker Hülsenabschnitt (34a), über den der Stift (33) zugänglich ist, über einen schlanken kegeligen Bereich (34a) in einen vorderen dünnen Hülsenteil (11", 34c) übergeht, in dem sich die Knautschzone (11") befindet (Fig. 12 bis 14).

4. Befestigungselement nach Anspruch 3, dadurch gekennzeichnet, daß der Abstand ($l_1$) der ringförmigen Anlagefläche (38) von der Druckplatte (39) gleich oder größer ist als die Hälfte der Hülsenlänge ($l_2$).

5. Befestigungselement nach einem der Ansprüche 3 und 4, dadurch gekennzeichnet, daß der Stift (33) vollständig aus Metall besteht und frei von einer Umhüllung ist.

6. Befestigungselement nach einem der vorhergehenden Ansprüche, dadurch gekennzeichnet, daß am vorderen Ende der Hülse (31 ; 34) ein steifer Führungsabschnitt (25 ; 34c) vorgesehen ist, an den in Richtung der Druckplatte (39) die Knautschzone (11' ; 11") anschließt, wobei der Führungsabschnitt vorzugsweise eine zylindrische Wand hat.

7. Befestigungselement nach einem der vorhergehenden Ansprüche, insbesondere nach Anspruch 6, dadurch gekennzeichnet, daß der Halteteil (23 ; 32 ; 46) am vorderen Ende der Hülse (31 ; 34) eine Brücke (27 ; 35) aufweist, die die Hülsenbohrung (28 ; 36) überbrückt (Fig. 5 bis 14).

8. Befestigungselement nach einem der vorhergehenden Ansprüche, dadurch gekennzeichnet, daß der Stift (2 ; 33 ; 45) als Schlagstift ausgebildet ist und eine Nagelspitze (16 ; 42) aufweist, wobei der Stift vorzugsweise aus einem so harten Material besteht, daß er mit einem Schußapparat in die Unterkonstruktion (M ; $U_1$ ; $U_2$) einschießbar ist.

9. Befestigungselement nach einem der Ansprüche 1 bis 7, dadurch gekennzeichnet, daß der Stift (24) als Schraube ausgebildet ist, und an seinem hinteren Ende Mitnehmerflächen (30a) für die Übertragung eines Drehmomentes aufweist (Fig. 5 bis 7).

10. Befestigungselement nach einem der vorhergehenden Ansprüche, dadurch gekennzeichnet, daß die Knautschzone (11 ; 11' ; 11") durch mindestens einen ringförmigen Bereich (12) mit gegenüber den übrigen Teilen (13) der Hülse (5 ; 31 ; 34) verminderter Wandstärke gebildet ist.

11. Befestigungselement nach einem der vorhergehenden Ansprüche, dadurch gekennzeichnet, daß der Halteteil (1 ; 23 ; 34 ; 46) eine Vertiefung (6 ; 6' ; 37) aufweist, die zur Aufnahme des Kopfes (15 ; 30 ; 44) des Stiftes (2 ; 24 ; 33 ; 45) bestimmt ist.

12. Befestigungselement nach einem der vorhergehenden Ansprüche, dadurch gekennzeichnet, daß der Kopf (15 ; 30 ; 44) des Stiftes (2 ; 24 ; 33, 45) mit seiner Unterfläche entweder an der ringförmigen Anlagefläche (6a ; 6'a ; 38) oder einer anderen ringförmigen Fläche des Halteteiles (1 ; 23 ; 32 ; 46) dichtend anliegt.

13. Befestigungselement nach einem der Ansprüche 11 und 12, dadurch gekennzeichnet, daß die Vertiefung (7, 8) eine kreisrunde Umfangsfläche hat, die bei eingesetztem Stift dichtend an Umfangsflächen des Kopfes des Stiftes (2 ; 24) anliegt.

14. Befestigungselement nach einem der Ansprüche 1 bis 4 und 6 bis 13, dadurch gekennzeichnet, daß der Stift (2 ; 24 ; 45) ausgehend von seinem Kopf (15 ; 30) über einen Teil (17) seiner Länge mit Kunststoff ummantelt ist.

15. Befestigungselement nach Anspruch 14, dadurch gekennzeichnet, daß der ummantelte Teil (17) des Stiftes (2 ; 24 ; 45) passend in die Hülsenbohrung (8) eingreift.

## Claims

1. A fastening element ($B_1$ ; $B_2$ ; $B_3$ ; $B_4$), particularly for securing heat-insulating and sound-proofing plates (P ; $P_1$ ; $P_2$ ; $P_3$) to an under-construction (M ; U ; $U_1$ ; $U_2$), having a holding part (1 ; 23 ; 32 ; 46) which is preferably in the form of a plastics injection-moulded part having a sleeve (4 ; 31 ; 34) which has an axially compressible crumple zone (11 ; 11' ; 11") extending over at least a part of its length and an integrally formed pressure plate (3, 39) of plastics material at the rear end of the fastening element, wherein the pressure plate has a large area compared with the diameter of the sleeve, and a pin (2 ; 24 ; 33 ; 45) of rigid material, especially metal, which is insertable into the sleeve (4 ; 31 ; 34) and has at its rear end a shoulder (19 ; 44) which can be brought into abutment against an annular contact surface (6a ; 6'a ; 38) of the sleeve (4 ; 31 ; 34), characterised in that the sleeve (4 ; 31 ; 34) has at the front end of the fastening element an end (14, 35) in the form of a contact surface, and that, when the shoulder (19 ; 44) of the pin (2 ; 24 ; 33 ; 45) abuts against the annular contact surface (6a ; 6'a ; 38), an anchoring region (2a ; 29 ; 41) of the said pin projects out of the end, in the form of a contact surface, of the sleeve.

2. A fastening element as claimed in claim 1, characterised in that the pin (2 ; 24 ; 45) is encased with plastics material in the region of its rear end and its encased region (30) abuts sealingly against the holding part (1 ; 23 ; 46), preferably in the region of the pressure plate (3).

3. A fastening element as claimed in claim 1, characterised in that the annular contact surface (38) of the sleeve (34) is spaced from the pressure plate (39), and the internal diameter of the sleeve, commencing from the annular contact surface (38), is larger than the diameter of the head (44) of the pin, wherein preferably a rear, thick portion (34a) of the sleeve, through which the pin (33) is accessible, merges by way of a slender conical region (34a) into a front, thin part (11″, 34c) of the sleeve in which the crumple zone (11″) is located (Figs. 12 to 14).

4. A fastening element as claimed in claim 3, characterised in that the distance ($l_1$) between the annular contact surface (38) and the pressure plate (39) is equal to or greater than half the length ($l_2$) of the sleeve.

5. A fastening element as claimed in any one of claims 3 and 4, characterised in that the pin (33) is made entirely from metal and is not encased.

6. A fastening element as claimed in any one of the preceding claims, characterised in that a rigid guide portion 25 ; 34c) is provided at the front end of the sleeve (31 ; 34) and the crumple zone (11′ ; 11″) is contiguous to the said guide portion towards the pressure plate (39), wherein the guide portion preferably has a cylindrical wall.

7. A fastening element as claimed in any one of the preceding claims, particularly claim 6, characterised in that the holding part (23 ; 32 ; 46) has a bridge (27, 35) on the front end of the sleeve (31 ; 34) which bridges the bore (28 ; 36) in the sleeve (Figs. 5 to 14).

8. A fastening element as claimed in any one of the preceding claims, characterised in that the pin (2 ; 33 ; 45) is an impact pin and has a nail point (16 ; 42), wherein the pin is made preferably from a material which is sufficiently hard to allow the pin to be shot into the under-construction (M ; $U_1$ ; $U_2$) by means of a gun.

9. A fastening element as claimed in any one of claims 1 to 7, characterised in that the pin (24) is in the form of a screw and its rear end has driving surfaces (30a) for transmitting a torque (Figs. 5 to 7).

10. A fastening element as claimed in any one of the preceding claims, characterised in that the crumple zone (11 ; 11′ ; 11″) is formed by at least one annular region (12) having a wall of reduced thickness compared with the other parts (13) of the sleeve (5 ; 31 ; 34).

11. A fastening element as claimed in any one of the preceding claims, characterised in that the holding part (1 ; 23 ; 34 ; 46) has a depression (6 ; 6′ ; 37) intended for receiving the head (15 ; 30 ; 44) of the pin (2 ; 24 ; 33 ; 45).

12. A fastening element as claimed in any one of the preceding claims, characterised in that the under-surface of the head (15 ; 30 ; 44) of the pin (2 ; 24 ; 33 ; 45) abuts sealingly against either the annular contact surface (6a ; 6'a ; 38) or another annular surface of the holding part (1 ; 23 ; 32 ; 46).

13. A fastening element as claimed in any one of claims 11 and 12, characterised in that the depression (7, 8) has a circular peripheral surface which abuts sealingly against the peripheral surfaces of the head of the pin (2, 24) when the pin is inserted.

14. A fastening element as claimed in any one of claims 1 to 4 and 6 to 13, characterised in that the pin (2 ; 24 ; 45) is encased with plastics material over a part (17) of its length commencing from its head (15 ; 30).

15. A fastening element as claimed in claim 14, characterised in that the encased part (17) of the pin (2 ; 24 ; 45) fits into the bore (8) in the sleeve.

**Revendications**

1. Elément de fixation ($B_1$ ; $B_2$ ; $B_3$ ; $B_4$), en particulier pour fixer des plaques d'isolation thermique et phonique (P ; $P_1$ ; $P_2$ ; $P_3$) sur un soubassement (M ; U ; $U_1$ ; $U_2$), comprenant une partie support (1, 23 ; 32 ; 46) constituée d'une pièce de matière synthétique moulée par injection, avec un manchon (4 ; 31 ; 34) qui comporte, sur au moins une partie de la longueur, une zone nervurée et axialement compressible (11 ; 11′ ; 11″) et, à l'extrémité arrière de l'élément de fixation, une plaque de pression (3, 39) en matière synthétique formée d'une seule pièce avec ledit élément et de grande surface par rapport au diamètre du manchon, l'élément de fixation comprenant aussi une tige (2 ; 24 ; 33 ; 45) en matériau rigide, en particulier en métal, qui peut se placer dans le manchon (4 ; 31 ; 34) et comporte, à son extrémité arrière, un épaulement (19 ; 44) qui peut être appliqué contre une surface d'appui annulaire (6a ; 6'a ; 38) du manchon (4 ; 31 ; 34), ledit élément de fixation étant caractérisé en ce que le manchon (4 ; 31 ; 34) comporte, à l'extrémité avant de l'élément de fixation, une extrémité (14, 35) constituée comme surface d'appui ; et en ce que la tige (2 ; 24 ; 33 ; 45), quand son épaulement (19 ; 44) s'applique contre la surface d'appui annulaire (6a ; 6'a ; 38) dépasse, par une zone d'ancrage (2a ; 29 ; 41), l'extrémité de manchon formant surface d'appui.

2. Elément de fixation selon la revendication 1, caractérisé en ce que la tige (2 ; 24 ; 45) est entourée, dans la région de son extrémité arrière, par une enveloppe de matière synthétique et qu'elle s'applique de façon étanche sur la partie support (1 ; 23 ; 46) dans la région (30) de cette enveloppe, de préférence dans la région de la plaque de pression (3).

3. Elément de fixation selon la revendication 1, caractérisé en ce que la surface d'application annulaire (38) du manchon (34) est à une certaine distance de la plaque de pression (39) et que le diamètre intérieur du manchon, en partant de la surface d'application annulaire (38), est plus grand que le diamètre de la tête (44) de la tige, avec de préférence une partie arrière (34a) du manchon plus épaisse, par laquelle passe la tige (33), et qui se raccorde, par l'intermédiaire d'une région conique amincie (34a), à une partie avant mince (11″, 34c) du manchon, dans laquelle se trouve la zone nervurée (11″) (Fig. 12 à 14).

4. Elément de fixation selon la revendication 3, caractérisé en ce que l'écartement ($l_1$) de la surface d'application annulaire (38) vis-à-vis de la plaque de pression (39) est égal à la moitié de la longueur du manchon ($l_2$) ou plus grand.

5. Elément de fixation selon l'une des revendications 3 et 4, caractérisé en ce que la tige (33) est entièrement faite en métal et n'a pas d'enveloppe.

6. Elément de fixation selon l'une des revendications précédentes, caractérisé en ce qu'il est prévu, à l'extrémité avant du manchon (31 ; 34) une partie de guidage plus raide (25 ; 34c) à laquelle se raccorde, dans la direction de la plaque de pression (39), la zone nervurée (11′ ; 11″), la partie de guidage ayant de préférence une paroi cylindrique.

7. Elément de fixation selon l'une des revendications précédentes, en particulier selon la revendication 6, caractérisé en ce que la partie support (23 ; 32 ; 46) comporte, à l'extrémité avant du manchon (31 ; 34), une pièce formant pont (27 ; 35) qui franchit le perçage du manchon (28 ; 36) (Fig. 5 à 14).

8. Elément de fixation selon l'une des revendications précédentes, caractérisé en ce que la tige (2 ; 33 ; 45) est constituée comme une tige à percuter et comporte une pointe (16 ; 42), la tige étant constituée de préférence en un matériau suffisamment dur pour pouvoir être propulsée dans le soubassement (M ; $U_1$ ; $U_2$) par un appareil à détente.

9. Elément de fixation selon l'une des revendications 1 à 7, caractérisé en ce que la tige (24) est constituée comme une vis et comporte à son extrémité arrière des surfaces d'entraînement (30a) pour transmettre un couple de rotation (Fig. 5 à 7).

10. Elément de fixation selon l'une des revendications précédentes, caractérisé en ce que la zone nervurée (11 ; 11′ ; 11″) est formée par au moins une région de forme annulaire (12) avec une épaisseur de paroi réduite par rapport aux autres parties (13) du manchon (5 ; 31 ; 34).

11. Elément de fixation selon l'une des revendications précédentes, caractérisé en ce que la pièce support (1 ; 23 ; 34 ; 46) présente un renfoncement (6 ; 6′ ; 37), destiné à recevoir la tête (15 ; 30 ; 44) de la tige (2 ; 24 ; 33 ; 45).

12. Elément de fixation selon l'une des revendications précédentes, caractérisé en ce que la tête (15 ; 30 ; 44) de la tige (2 ; 24 ; 33 ; 45) s'applique de façon étanche par sa surface inférieure, soit contre la surface d'application annulaire (6a ; 6′a ; 38), soit contre une autre surface de forme annulaire de la pièce support (1 ; 23 ; 32 ; 46).

13. Elément de fixation selon l'une des revendications 11 et 12, caractérisé en ce que le renfoncement (7, 8) présente une surface périphérique circulaire qui s'applique de façon étanche contre les surfaces périphériques de la tête de la tige (2 ; 24) lorsque la tige est enfoncée.

14. Elément de fixation selon l'une des revendications 1 à 4 et 6 à 13, caractérisé en ce que la tige (2 ; 24 ; 45) est entourée d'une enveloppe de matière synthétique sur une partie (17) de sa longueur, en partant de sa tête (15 ; 30).

15. Elément de fixation selon la revendication 14, caractérisé en ce que la partie enveloppée (17) de la tige (2 ; 24 ; 45) entre avec ajustement dans le perçage du manchon (8).

8

21

15

19

18

17

B₁

2

6

6a

9

3

20

7

8

1

10

4

5

13

11

12

2a

16

14

_Fig.1_

9a

1

9b

2

_Fig. 2_

_Fig. 3_

Fig. 4

Fig. 5

Fig. 6

30 b

6´b   30   18´   7´

<u>Fig. 7</u>

P₁

U

B₃

45

6″

46

11‴

45a

Fig.8

Fig.9

Fig. 10

46

<u>Fig.11</u>

45

P$_2$

45a

U$_1$

B_4

39

32

34

34a

37

$l_1$

44

33

38

$l_2$

47a

43

34a

47

11''

41

34c

42

36

35

_Fig.12_

_Fig.13_

40

Fig.14